# EUROPÄISCHE PATENTSCHRIFT

(11) **EP 0 981 022 B1**
(45) Veröffentlichungstag und Bekanntmachung des Hinweises auf die Patenterteilung: **05.02.2003**
(21) Anmeldenummer: 99114891.7
(22) Anmeldetag: 30.07.1999
(51) Int. Cl.: F23J 15/00, B01D 53/75

(54) **Verfahren zum Reinigen von Rauchgas**
Process for purification of flue gas
Procédé de purification de fumées

(30) Priorität: 17.08.1998 DE 19837148
(43) Veröffentlichungstag der Anmeldung: 23.02.2000
(73) Patentinhaber: Labuschewski, Jürgen, Dipl.-Ing., 58638 Iserlohn (DE)
(72) Erfinder: Dohmann, Joachim, Dr., 46149 Oberhausen (DE); Mensching, Hartmut, 45307 Essen (DE); Iqbal Muhammad Mian, 44149 Dortmund (DE); Labuschewski, Jürgen, 58638 Iserlohn (DE)
(74) Vertreter: Radünz, Ingo, Dipl.-Ing.

(56) Entgegenhaltungen:
- CA-A- 2 199 454
- DE-A- 19 751 934
- US-A- 5 176 088
- US-A- 5 270 015
- GOTTSCHALK ET AL: "A modern flue-gas cleaning system for waste incineration plants" ABB REVIEW, Nr. 1, 1996, Seiten 29-36, XP000554853

## Beschreibung

Die Erfindung betrifft ein Verfahren zum Reinigen von Rauchgas aus Müll-, Holz- oder Klärschlammverbrennungsanlagen. Ein solches Verfahren ist aus dem Dokument "A modern flue-gas cleaning system for waste incineration plants" yottschalk et al, ABB review, Nr 1, 1996, Seiten 29-36.

Zur Abscheidung der sauren Rauchgasbestandteile wird in bekannten Reinigungsverfahren ein Neutralisationsmittel verwendet. Üblich ist der Einsatz von Kalkmilch, die in einen der Wäscher oder in beide Wäscher dosiert wird. Die Reaktionsprodukte der Neutralisationsreaktion werden als Suspension aus den Wäschern ausgeschleust. Wahlweise wird aus diesen ausgeschleusten Flüssigkeiten kristalliner Gips entfernt und einer Nutzung zugeführt. Die Flüssigkeit bzw. der verbleibende Rest der Flüssigkeit wird in einer separaten Neutralisationsanlage auf einen gewünschten pH-Wert unter Einsatz weiterer Kalkmilch eingestellt und dem Sprühtrockner zugeleitet. Die in dem Sprühtrockner durch die Reaktion der Flüssigkeit mit dem Rauchgas entstehenden, festen Reaktionsprodukte werden über den dem Sprühtrockner nachgeschalteten Entstauber aus der Anlage ausgeschleust.

In einigen Sonderausführungen derartiger Rauchgasreinigungsanlagen wird eine Reihenschaltung zweier Wäscher vorgenommen, wobei der erste der Abscheidung von Halogenwasserstoffen unter Einsatz von Kalkmilch dient und der zweite Wäscher Schwefeloxide unter Einsatz von Natronlauge als Neutralisationsmittel abscheidet. Die Abflutungen beider Wäscher werden in dieser Variante außerhalb der Wäscher einem Umsalzungsreaktor zugeführt, in dem kristalliner Gips aus der Lösung anfällt.

Der Filterschichtadsorber dient der Feinreinigung des Rauchgases und besteht aus einem Flugstaubreaktor mit nachgeschalteten Filterflächen. In das in den Filterschichtadsorber eintretende Rauchgas wird ein festes, pulverförmiges Adsorbens eingeblasen, das zum Aufbau von Filterschichten auf den Filterflächen dient. Das Adsorbens besteht in der Regel aus Kalkhydrat, dem zur Verbesserung des Abscheidevermögens für Schwermetalle und organische Spurenstoffe Aktivkohle oder ähnliche Stoffe zugesetzt sind. Das bei der Abreinigung der Filterflächen anfallende Adsorpt wird zum überwiegenden Teil erneut dem Filterschichtadsorber zugeführt. Ein Teil des Adsorpts wird aus dem Prozeß ausgeschleust.

Trotz aller Vorteile in Hinblick auf ein gutes Rückhaltevermögen für Schadstoffe besitzt dieses Verfahren einen Nachteil, daß insbesondere bei gutem Abscheidegrad der Wäscher nur geringe Schadstofffrachten in den Filterschichtadsorber eintreten und abgeschieden werden. Das aus dem Prozeß ausgeschleuste Adsorpt enthält in technisch üblichen Betriebsweisen noch große Anteile Kalkhydrat, das damit ungenutzt aus dem Prozeß entfernt wird und somit verloren ist.

Eine andere in der Praxis eingesetzte Variante einer Rauchgasreinigungsanlage besteht aus einer Anordnung eines Sprühtrockners, eines Entstaubers, einer Entstickungsanlage und einem nachgeschalteten Filterschichtadsorber. Das zur Neutralisation der sauren Schadstoffe eingesetzte Neutralisationsmittel wird in Form von Kalkmilch im Sprühtrockner eingesetzt. Die im Sprühtrockner durch Zerstäuben der Kalkmilch-Suspension des Neutralisationsmittels erzeugten Tropfen verdampfen aufgrund der im Sprühtrockner herrschenden Temperaturen. Während dieses Vorgangs findet die Neutralisationsreaktion in der flüssigen Phase der Tropfen statt. Die Neutralisationsmittel bzw. deren Reaktionsprodukte fallen nach der Trocknung bei diesem Verfahren als staubförmige feste Salze an, die mittels des Entstaubers aus dem Prozeß ausgeschleust werden. Bei einigen der bekannten Verfahren werden dem Neutralisationsmittel Aktivkohle oder -koks zugefügt, um die Abscheidung von Schwermetallen und organischen Spurenstoffen zu verbessern. Die Feinreinigung der Rauchgase erfolgt bei diesen Verfahren ebenfalls durch den Betrieb eines Filterschichtadsorbers.

In einigen ausgeführten Anlagen zur Rauchgasreinigung wird das im Filterschichtadsorber beladene Adsopt zur weiteren Ausnutzung vornehmlich der Aktivkohleanteile mittels einer Förderleitung in Staubform zu dem Entstauber zurückgeführt, der dem Sprühtrockner nachgeschaltet ist. Die stromabwärts des Sprühtrockners herrschenden Bedingungen lassen aber nur in geringem Umfang Reaktionen zwischen den sauren Rauchgasbestandteilen und den Kalkanteilen im trockenen Adsorpt zu. Der im Adsorpt enthaltene Kalkanteil bleibt auch in dieser Schaltungsvariante weitgehend ungenutzt.

Der Erfindung liegt die Aufgabe zugrunde, das gattungsgemäße Verfahren derart zu gestalten, daß der in dem Adsorpt enthaltene Kalkanteil besser genutzt werden kann.

Diese Aufgabe wird bei einem gattungsgemäßen Verfahren erfindungsgemäß durch die kennzeichnenden Merkmale des Patentanspruches 1 gelöst. Vorteilhafte Ausgestaltungen der Erfindung sind Gegenstand der Unteransprüche.

Durch die Verarbeitung des Adsorpts zu einer wässerigen Suspension kann der in dem Adsorpt enthaltene Anteil an nicht reagiertem Kalk innerhalb des Sprühtrockners und der Wäscher, zum Beispiel, mit dem Rauchgas reagieren und die sauren Rauchgasbestandteile abscheiden. Der in dem Adsorpt vorhandene ungenutzte Kalkanteil kann damit zur teilweisen oder vollständigen Substitution von Kalkmilch verwendet werden. Hierdurch können zum einen die Bereitstellungskosten für das Neutralisationsmittel vermindert werden. Zum anderen werden auch die zur Herstellung des Neutralisationsmittels erforderlichen fossilen Primärenergieträger in vermindertem Umfang zum Einsatz kommen. Ferner bewirkt eine Minderung des Anteils unreagierten Kalks auch eine Minderung der entsorgungspflichtigen Reststoffmengen. Wird die das Adsorpt enthaltene Suspension in den Sprühtrockner eingebracht, so kommen zusätzlich in den dem Adsorpt vorhandenen ungenutzten Aktivkohleanteile zum Tragen, indem sie die Abscheidung von Schwermetallen, wie Quecksilber, und von organischen Spurenstoffen, wie polyhalogenierten aromatischen Kohlenwasserstoffen (PCDD, PCDF), unterstützen.

Mehrere Ausführungsbeispiele der Erfindung sind in der Zeichnung dargestellt und werden im folgenden näher erläutert. Es zeigen
- Fig. 1 bis 4: zeigen verschiedene Verfahrensschemata eines Verfahren zum Reinigen von Rauchgas und
- Fig. 5: eine Variante des Verfahrens nach Fig. 4.

Ungereinigtes Rauchgas aus einer Feuerungsanlage, z. B. einer Müll-, Holz- oder Klärschlammverbrennungsanlage wird in einem ersten, nicht gezeigten Entstauber entstaubt und tritt danach in einen Sprühtrockner 1 ein. In diesem Sprühtrockner 1 wird in den Rohgasstrom Prozeßwasser aus einer Leitung 2 eingesprüht. Im Wärmetausch mit dem Rohgas verdampft das Prozeßwasser. Das abgekühlte Rohgas gelangt in einen weiteren Entstauber 3. Nach dem Austritt aus diesem Entstauber 3 wird das Rohgas einer Entstickungsanlage 4 zugeführt. In Strömungsrichtung des Rohgases ist hinter der Entstickungsanlage 4 ein Filterschichtadsorber 5 vorgesehen, der der Feinreinigung des Rauchgases dient.

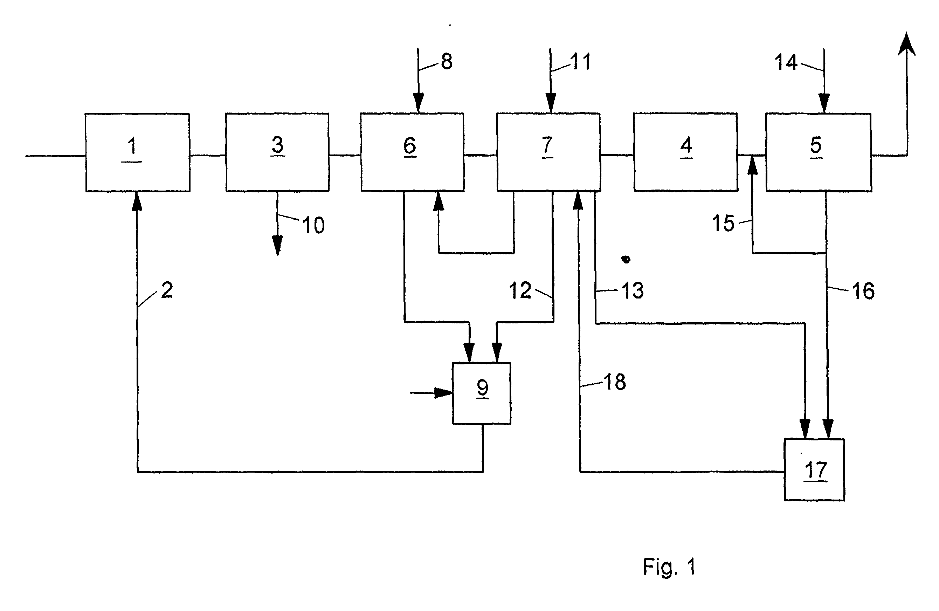

Gemäß den Fig. 1 bis 3 sind zwischen dem Entstauber 3 und der Entstickungsanlage 4 ein erster Wäscher 6 (HCl-Wäscher) und ein zweiter Wäscher 7 (SO₂-Wäscher) vorgesehen. Dem ersten Wäscher 6 werden über eine oder mehrere Leitungen 8 Prozeßwasser und Neutralisationsmittel in Form von Oxiden, Hydroxiden oder Karbonaten von Erdalkali- oder Alkalimetallen zugegeben. Es wird ein solcher pH-Wert eingestellt, daß in dem ersten Wäscher 6 aus dem Rohgas die Halogenwasserstoffe, insbesondere HCl entfernt werden. Das in dem ersten Wäscher 6 befindliche, Reaktionssalze enthaltende Prozeßwasser wird als Abflutung einer Neutralisationsstation 9 zugeführt und zur Einstellung eines gewünschten pH-Wertes mit einem Neutralisationsmittel versetzt, das bei den in den Fig. 1 dargestellten Verfahren aus Kalkmilch besteht. Das so behandelte, neutralisierte Prozeßwasser wird über die Leitung 2 in den Sprühtrockner 1 eingespeist.

In dem Sprühtrockner 1 verdampft das Prozeßwasser, wobei die in dem neutralisiertem Prozeßwasser enthaltenen alkalischen ' Bestandteile mit den sauren Rauchgasbestandteilen reagieren und Reaktionssalze bilden. Diese als Feststoffe anfallenden Reaktionssalze werden in dem Entstauber 3 abgeschieden und über eine Leitung 10 ausgeschleust.

Dem zweiten Wäscher 7 werden Prozeßwasser über eine Leitung 11 und Kalkmilch oder ein anderes zur Rauchgasentschwefelung verwendbares Neutralisationsmittel in einer solchen Menge zugeführt, daß aufgrund des sich einstellenden pH-Wertes in diesem zweiten Wäscher 7 aus dem Rohgas die Schwefeloxide entfernt werden. Die in dem zweiten Wäscher 7 gebildeten Reaktionssalze werden gemeinsam mit der Wäscherflüssigkeit abgeflutet. Die Abflutung wird vorzugsweise einem nicht dargestellten Hydrozyklon zur Eindickung zugeführt und aus diesem über eine Leitung 12 als Unterlauf und über eine Leitung 13 als Oberlauf abgeführt. Der Unterlauf 12 ist reich an kristallisierten Reaktionssalzen, die überwiegend aus Gips bestehen. Die festen Reaktionssalze werden nach Maßgabe der Dichte bzw. des Feststoffgehaltes der Wäscherflüssigkeit ausgeschleust und der Neutralisationsstation 9 zugeführt, in den auch die Abflutung des ersten Wäschers 6 gelangt. Ein Teil der Wäscherflüssigkeit des zweiten Wäschers 7 wird in den ersten Wäscher 6 geführt.

Anstelle von zwei hintereinander geschalteten Wäschern kann auch ein einziger Wäscher vorgesehen werden, in dem sowohl die Halogenwasserstoffe als auch die Schwefeloxide abgeschieden werden.

Der Filterschichtadsorber 5 besteht in bekannter Weise aus einem Flugstromreaktor, dem Filterflächen, z. B. eines Gewebefilters nachgeschaltet sind. In den Filterschichtadsorber 5 wird über eine Leitung 14 ein pulverförmiges Adsorbens zugeführt, welches aus Kalkhydrat besteht, dem Aktivkohle oder Aktivkoks beigemengt ist. Das Adsorbens schlägt sich auf den Filterflächen nieder und baut dort einen Filterkuchen auf, den das zu reinigende Rauchgas durchdringt und dabei mit dem Filterkuchen reagiert. Die Filterflächen des Filterschichtadsorbers 5 werden in zeitlichen Abständen abgereinigt.

Das bei der Abreinigung der Filterflächen anfallende Adsorpt enthält noch nicht ausreagierte Anteile an Kalk und Aktivkohle bzw. Aktivkoks. Ein Teil dieses Adsorpts wird mittels der bekannten Flugstromtechnik staubförmig über eine Rückführleitung 15 in den Filterschichtadsorber 5 zurückgegeben. Der restliche Teil des Adsorpts wird über eine Leitung 16 einem Mischaggregat 17 zugeführt, in dem das Adsorpt in Wasser suspendiert und damit reaktions- und pumpfähig gemacht wird. Diese Adsorpt-Suspension wird als Neutralisationsmittel auf die nachfolgend erläuterte Weise in den beschriebenen Verfahren zum Reinigen von Rauchgas eingesetzt.

Bei den in den Fig. 1 bis 3 dargestellten Verfahrensvarianten wird zum Anmachen der Adsorpt-Suspension Prozeßwasser und zwar vorzugsweise der Oberlauf 13 der Abflutung des zweiten Wäschers 7 verwendet. Der Feststoffgehalt des Oberlaufs 13 der Abflutung ist geringer als der des Unterlaufs 12, weshalb der Oberlauf 13 besser geeignet ist, Feststoff zu suspendieren.

Die Adsorpt-Suspension wird gemäß Fig. 1 über eine Leitung 18 in den Sumpf des zweiten Wäschers 7 eingespeist. Der in der Adsorpt-Suspension enthaltene Kalkanteil steht hier zur Neutralisation der Schwefeloxide zur Verfügung. Die in dieser Adsorpt-Suspension enthaltene Reaktionsprodukte der im Filterschichtadsorber 5 abgeschiedenen sauren Rauchgasbestandteile lösen sich zum Teil in der Suspension bzw. gelangen als feinkristalline Feststoffe in die Wäscherflüssigkeit des zweiten Wäschers 7. Die Summe.aller Reaktionsprodukte aus der Abscheidung saurer Rauchgasbestandteile wird über den Unterlauf 12 des an den zweiten Wäscher 7 angeschlossenen Hydrozyklons ausgeschleust.

Die Verfahrensvariante gemäß Fig. 1 ist dann sinnvoll, wenn keine Gewinnung von verwertbarem Gips gewünscht wird oder aber nur geringe Anforderungen an die Qualität des Gipses gestellt werden. Die Einschränkungen der Gipsverwertbarkeit resultieren aus dem erhöhten Anteil an Sulfit im Adsorpt, das nur zum Teil im Wäscher 7 zum Sulfat oxidiert wird.

Über das Adsorpt werden außer den Kalkanteilen auch Aktivkohle- und Aktivkoksbestandteile in die Wäscherflüssigkeit des zweiten Wäschers 7 eingebracht. Diese Aktivkohlebestandteile sind in dem Oberlauf 13 des Hydrozyklons angereichert. Dadurch, daß die Wäscherflüssigkeit mit der Adsorpt-Suspension beaufschlagt wird, gelangen die in dem Oberlauf 13 enthaltenen Aktivkohlebestandteile erneut in den Wäscher 7. Die derart eingebrachten Aktivkohlebestandteile reichern sich dadurch in der Wäscherflüssigkeit an. Dies beeinträchtigt zwar den erreichbaren Weißgrad des erzeugten Gipses, allerdings kommt die schadstoffbindende und schadstoffzerstörende Eigenschaft der Aktivkohle zusätzlich zur Geltung.

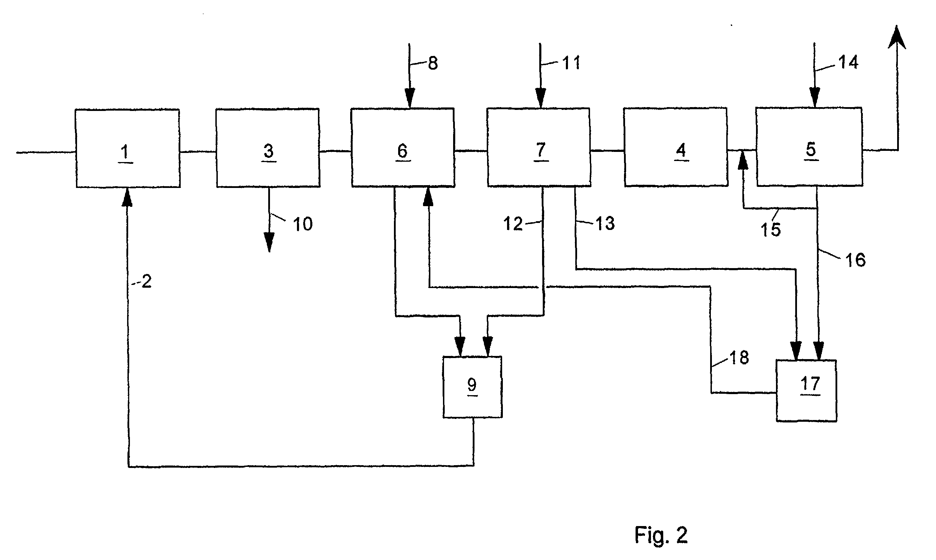

In der in Fig. 2 dargestellten Verfahrensvariante wird die Adsorpt-Suspension zur Neutralisation der Halogenwasserstoffe in dem ersten Wäscher 6 verwendet. Die unter Verwendung von Prozeßwasser hergestellte Adsorpt-Suspension wird über die Leitung 18 in den Sumpf des ersten Wäschers 6 gegeben. Durch die Einleitung der Adsorpt-Suspension werden Halogenwasserstoffe in die entsprechenden wasserlöslichen Calciumsalze überführt. Es ist sicherzustellen, daß durch die Zugabe der Adsorpt-Suspension der pH-Wert der Wäscherflüssigkeit in dem ersten Wäscher 6 nicht so stark ansteigt, daß bereits in diesem Wäscher 6 eine nennenswerte Abscheidung von Schwefeloxiden stattfindet. Als Prozeßwasser kann ein Teilstrom des Hydrozyklon-Oberlaufs des zweiten Wäschers 7 verwendet werden.

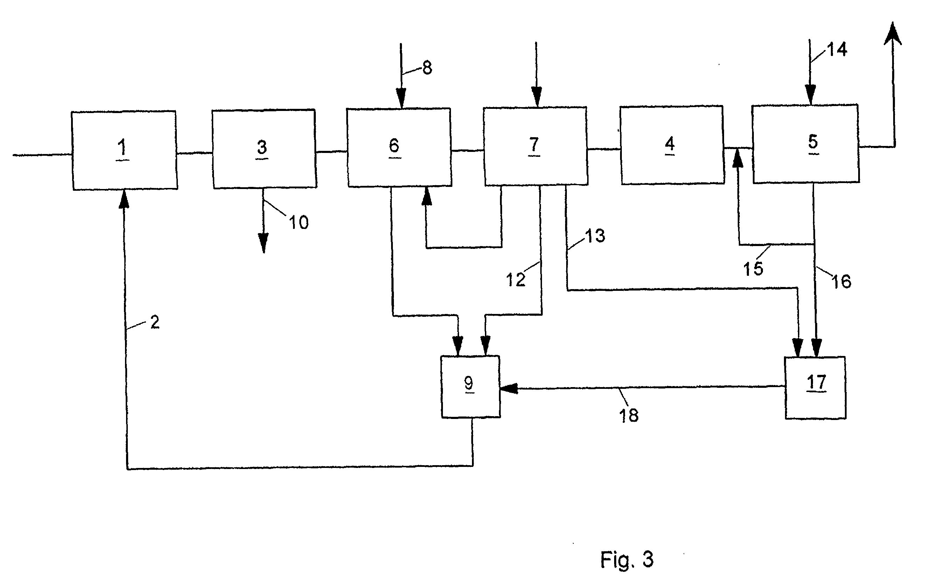

Bei der in Fig. 3 dargestellten Verfahrensvariante wird ebenfalls ein Teilstrom des Adsorpts mit Prozeßwasser in dem Mischaggregat 17 zu einer Suspension verarbeitet. Abweichend von den bisher beschriebenen Verfahrensvarianten wird Adsorpt-Suspension dem Sprühtrockner 1 über die Leitungen 2, 18 zugeführt. Bei dieser Verfahrensvarianten können der Adsorpt-Suspension weitere Neutralisationsmittel sowie weitere Hilfsstoffe wie Aktivkohle zugeführt werden. Es ist möglich, diesen Strom vor der Einspeisung in den Sprühtrockner 1 mit anderen Neutralisationsmitteln oder anderen, Neutralisationsmittel enthaltende Suspensionen aus der Neutralisationsstation 9 zu vermischen.

Innerhalb des Sprühtrockners 1 findet die Neutralisationsreaktion zwischen dem in der Suspension enthaltenen Kalkanteil und den sauren Schadstoffkomponenten des Rauchgases statt. Die Aktivkohleanteile der Adsorpt-Suspension tragen zur Abscheidung von Schwermetallen (Quecksilber) und organischen Spurenstoffen (PCDD, PCDF) bei. Die dabei entstehenden Reaktionsprodukte werden über den dem Sprühtrockner 1 nachgeschalteten Entstauber 3 aus dem Prozeß ausgeschleust.

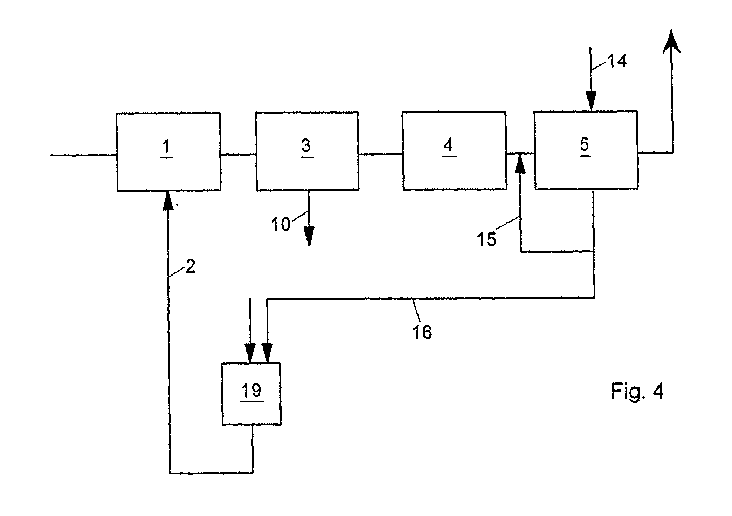

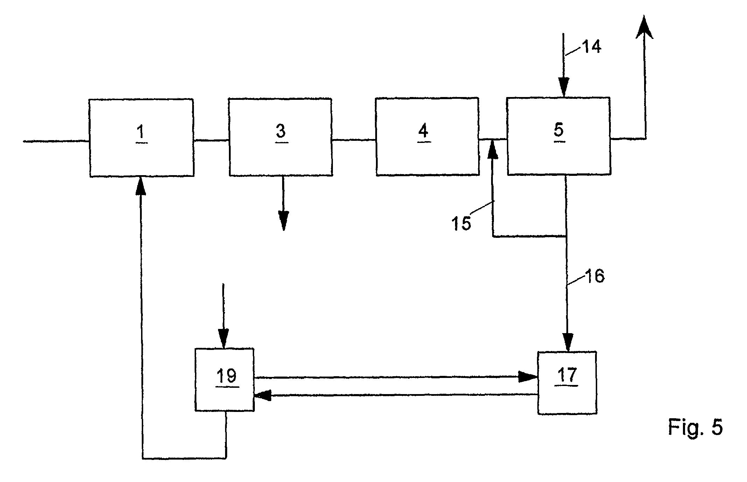

Die in den Fig. 4 und 5 dargestellte Verfahrensvariante verwendet keine Wäscher. Die Abscheidung der sauren Rauchgasbestandteile findet in dem Sprühtrockner 1 statt, dem Kalkmilch zugeführt wird. Diese Kalkmilch wird in einer Ansetzstation 19 aus Wasser und Kalk, gegebenenfalls mit einem Zusatz von Aktivkohle oder -koks und anderen Hilfsstoffen hergestellt. Aus der Ansetzstation 19 wird die Kalkmilch über die Leitung 2 direkt oder unter Zwischenschaltung eines Vorlagebehälters in den Sprühtrockner 1 eingespeist. Der Teilstrom des Adsorpts wird über die Leitung 16 der Ansetzstation 19 zugeführt und mit dem Kalk in dem oder vor dem Eintritt in die Ansetzstation 19 vermischt. Gemäß Fig. 5 kann das Adsorpt auch in das Mischaggregat 17 gegeben und dort unter Verwendung von Kalkmilch zu der Adsorpt-Suspension verarbeitet werden. Diese Kalkmilch wird der Ansetzstation 19 entnommen, in den die Adsorpt-Suspension zurückgeführt wird.

In allen beschriebenen Verfahrensvarianten unter der Verwendung von Adsorpt können Additive verwendet werden, die den pH-Wert wäßriger Lösungen puffern. Zu den Stoffen mit dieser Wirkung zählen z. B. Carbonsäuren oder einige Dicarbonsäuren sowie deren jeweiligen Alkali- oder Erdalkalimetallsalze. Vorteilhaft ist z. B. die Verwendung technischer Adipinsäure.

Durch diese den pH-Wert puffernden Additive wird der im Sprühtrockner 1 oder in dem zweiten Wäscher 7 erreichbare Abscheidegrad für saure Rauchgasbestandteile, insbesondere derjenigen für Schwefeloxide erhöht. Die den pH-Wert puffernden Additive können bereits in der Adsorptsuspension vor Einspeisung dieser Suspension in den Sprühtrockner bzw. in den Wäscher enthalten sein. Es kommen unterschiedliche Möglichkeiten in Betracht, die Adsorptsuspension mit den den pH-Wert puffernden Additiven zu versetzen.

Besonders vorteilhaft ist die Verwendung eines Adsorbens in dem Filterschichtadsorber 5, das neben den Hauptbestandteilen Kalkhydrat und den Nebenbestandteilen Aktivkohle bzw. Aktivkoks bereits Beimengungen von den pH-Wert puffernden Additiven enthält. Die den pH-Wert puffernden Additive entfalten ihre Wirkung zwar nicht in dem Filterschichtadsorber 5, gelangen aber bei der Abreinigung der Filterschichtadsorbers 5 als Bestandteil des Adsorpts über die Leitung 16 in die entsprechenden Anlagenteile, in denen es zur Entfaltung der den pH-Wert puffernden Wirkung kommt. Da einige der Additive (z. B. Calciumformiat oder Adipinsäure) in dem relevanten Temperaturbereich in fester Form vorliegen, gestaltet sich deren Handhabung als Adsorbensbestandteil besonders einfach.

Ebenfalls denkbar ist die direkte Dosierung dieser den pH-Wert puffernden Additive z. B. in das Mischaggregat 17 oder auch die Zugabe der Stoffe zu dem in den Filterschichtadsorber 5 eintretenden Gasstrom.

## Patentansprüche

1. Verfahren zum Reinigen von Rauchgas aus Müll-, Holz- oder Klärschlammverbrennungsanlagen, bei dem das Rauchgas in einem Sprühtrockner gekühlt, in einem Entstauber entstaubt, gegebenenfalls in einem oder in zwei hintereinander geschalteten Wäschern von Halogenwasserstoffen und Schwefeloxiden befreit und anschließend in einem mit einem Kalkhydrat und gegebenenfalls Aktivkohle bzw. Aktivkoks beinhaltendem Absorbens beaufschlagten Filterschichtadsorber gereinigt wird, wobei der Filterschichtadsorber in zeitlichen Abständen abgereinigt wird, bei dem das bei der Abreinigung des Filterschichtadsorbers anfallende Adsorpt oder ein Teilstrom zu einer wässerigen Suspension verarbeitet wird und diese Suspension in mindestens einem dem Filterschichtadsorber vorgeschalteten Aggregat mit dem Rauchgas in Kontakt gebracht wird.

2. Verfahren nach Anspruch 1, **dadurch gekennzeichnet, daß** das bei der Abreinigung des Filterschichtadsorbers anfallende Adsorpt oder ein Teilstrom davon mit Prozeßwasser zu der wässerigen Suspension verarbeitet wird.

3. Verfahren nach Anspruch 1, **dadurch gekennzeichnet, daß** das bei der Abreinigung des Filterschichtadsorbers anfallende Adsorpt oder ein Teilstrom davon mit Abflutungen der Wäscher oder eines Teiles der Abflutungen zu der wässerigen Suspension verarbeitet wird.

4. Verfahren nach einem der Ansprüche 1 bis 3, **dadurch gekennzeichnet, daß** das bei der Abreinigung des Filterschichtadsorbers anfallende Adsorpt zusammen mit weiteren Stoffen, wie Oxiden, Carbonaten oder Hydroxide von Alkali- oder Erdalkalimetallen, und Hilfsstoffen, wie Dicarbonsäuren oder deren Salze, Carbonsäuren oder deren Salze, zu der wässerigen Suspension verarbeitet wird.

5. Verfahren nach einem der Ansprüche 1 bis 4, **dadurch gekennzeichnet, daß** die das Adsorpt enthaltende Suspension dem die Schwefeloxide abscheidenden Wäscher zugeführt wird.

6. Verfahren nach einem der Ansprüche 1 bis 4, **dadurch gekennzeichnet, daß** nach dem Entstauber das Rauchgas in einem oder in zwei hintereinander geschalteten Wäschern von Halogenwasserstoffen und Schwefeloxiden befreit wird und daß die das Adsorpt enthaltende Suspension dem die Halogenwasserstoffe abscheidenden Wäscher zugeführt wird.

7. Verfahren nach einem der Ansprüche 1 bis 4, daß die das Adsorpt enthaltende Suspension dem Sprühtrockner zugeführt wird.

8. Verfahren nach Anspruch 7, **dadurch gekennzeichnet, daß** die das Adsorpt enthaltende Suspension zusammen mit Prozeßwässern oder Lösungen oder Suspensionen von Neutralisationsmitteln, wie Kalkmilch dem Sprühtrockner zugeführt wird.

9. Verfahren nach einem der Ansprüche 1 bis 8, **dadurch gekennzeichnet, daß** den pH-Wert puffernde Additive, wie Carbonsäuren, Dicarbonsäuren oder deren Alkali- oder Erdalkalisalze als Bestandteile des im Filterschichtadsorber eingesetzten Adsorbens dem Prozeß zugefügt werden.

10. Verfahren nach einem der Ansprüche 1 bis 8, **dadurch gekennzeichnet, daß** den pH-Wert puffernde Additive wie Carbonsäuren, Dicarbonsäuren oder deren Alkali- oder Erdalkalisalze zu dem in den Filterschichtadsorber eintretenden Gasstrom dosiert werden und diese Additive gemeinsam mit dem Adsorbens oder dem rezirkulierten Adsorpt auf den Filterflächen des Filterschichtadsorbers niedergeschlagen werden.

11. Verfahren nach einem der Ansprüche 1 bis 8, **dadurch gekennzeichnet, daß** den pH-Wert puffernde Additive wie Carbonsäuren, Dicarbonsäuren oder deren Alkali- oder Erdalkalisalze dem bei der Abreinigung des Filterschichtadsorbers anfallenden Adsorpt beigemengt werden.

12. Verfahren nach einem der Ansprüche 1 bis 8, **dadurch gekennzeichnet, daß** den pH-Wert puffernde Additive wie Carbonsäuren, Dicarbonsäuren oder deren Alkali- oder Erdalkalisalze zu der aus dem bei der Abreinigung des Filterschichtadsorbers anfallenden Adsorpt hergestellten Adsorptsuspension zugegeben werden.

## Claims

1. Method of cleaning flue gas from refuse, wood or sewage combustion plants, in which the flue gas is cooled in a spray drier, dedusted in a dust extractor, optionally freed of hydrogen halides and sulphur oxides in a washer or two washers connected in series and subsequently cleaned in a filter bed adsorber charged with an absorbing substance containing calcium hydrate and optionally activated carbon or activated coke, wherein the filter bed adsorber is dedusted at intervals in time, in which the adsorbate occurring in the dedusting of the filter bed adsorber or a part flow of the adsorbate is processed into an aqueous suspension and this suspension is brought into contact with the flue gas in at least one unit connected upstream of the filter bed adsorber.

2. Method according to claim 1, **characterised in that** the adsorbate occurring in the dedusting of the filter bed adsorber or a part flow thereof is processed by process water into the aqueous suspension.

3. Method according to claim 1, **characterised in that** the adsorbate occurring in the dedusting of the filter bed adsorber or a part flow thereof is processed with effluents of the washer or a part of the effluents into the aqueous suspension.

4. Method according to one of claims 1 to 3, **characterised in that** the adsorbate occurring in the dedusting of the filter bed adsorber is processed together with further substances, such as oxides, carbonates or hydroxides of alkali metals or alkali earth metals, and adjuvants, such as dicarbonic acids or the salts thereof, carbonic acids or the salts thereof, into the aqueous suspension.

5. Method according to one of claims 1 to 4, **characterised in that** the suspension containing the adsorbate is fed to the washer separating the sulphur oxides.

6. Method according to one of claims 1 to 4, **characterised in that** after the dust extractor the flue gas is freed of hydrogen halides and sulphur oxides in a washer or two washers connected in series and that the suspension containing the adsorbate is fed to the washer separating the hydrogen halides.

7. Method according to one of claims 1 to 4, **characterised in that** the suspension containing the adsorbate is fed to the spray drier.

8. Method according to claim 7, **characterised in that** the suspension containing the adsorbate is fed to the spray drier together with process waters or solutions or suspensions of neutralisation agents, such as lime solution.

9. Method according to one of claims 1 to 8, **characterised in that** additives buffering the pH value, such as carbonic acids, dicarbonic acids or the alkali salts or earth alkali salts thereof, as components of the adsorbing substance used in the filter bed adsorber are fed to the process.

10. Method according to one of claims 1 to 8, **characterised in that** additives buffering the pH value, such as carbonic acids, dicarbonic acids or the alkali salts or earth alkali salts thereof, are admetered to the gas flow entering the filter bed adsorber and these additives in common with the adsorbing substance or the recirculated adsorbate are precipitated on the filter surfaces of the filter bed adsorber.

11. Method according to one of claims 1 to 8, **characterised in that** additives buffering the pH value, such as carbonic acids, dicarbonic acids or the alkali salts or earth alkali salts thereof, are admixed with the adsorbate occurring in the dedusting of the filter bed adsorber.

12. Method according to one of claims 1 to 8, **characterised in that** additives buffering the pH value, such as carbonic acids, dicarbonic acids or the alkali salts or earth alkali salts thereof, are added to the adsorbate suspension produced from the adsorbate occurring in the dedusting of the filter bed adsorber.

## Revendications

1. Procédé de purification de gaz de fumée provenant d'installations d'incinération d'ordures ménagères, de bois ou de boues de curage, dans lequel le gaz de fumée est refroidi dans un séchoir à pulvérisation, dépoussiéré dans un dépoussiéreur, éventuellement débarrassé d'hydracides halogénés et d'oxydes de souffre dans un ou deux laveurs reliés l'un après l'autre et est ensuite purifié dans un adsorbeur à couche filtrante alimenté par un adsorbant contenant un hydrate de chaux et éventuellement du charbon actif ou du coke actif, l'adsorbeur à couche filtrante étant nettoyé à intervalles de temps, dans lequel l'adsorbat produit lors du nettoyage de l'adsorbeur à couche filtrante ou un courant partiel de celui-ci est transformé en une suspension aqueuse et cette suspension aqueuse est mise en contact avec le gaz de fumée dans au moins un agrégat relié en amont de l'adsorbeur à couche filtrante.

2. Procédé selon la revendication 1, **caractérisé en ce que** l'adsorbat produit lors du nettoyage de l'adsorbeur à couche filtrante ou un courant partiel de celui-ci est transformé par de l'eau de traitement en la suspension aqueuse.

3. Procédé selon la revendication 1, **caractérisé en ce que** l'adsorbat produit lors du nettoyage de l'adsorbeur à couche filtrante ou un courant partiel de celui-ci est transformé par les effluents du laveur ou par une partie desdits effluents en la suspension aqueuse.

4. Procédé selon l'une des revendications 1 à 3, **caractérisé en ce que** l'adsorbat produit lors du nettoyage de l'adsorbeur à couche filtrante, conjointement à d'autres substances, telles que des oxydes, des carbonates ou des hydroxydes de métaux alcalins ou alcalino-terreux, et à des substances auxiliaires, telles que des acides dicarboxyliques ou leurs sels, des acides carboxyliques ou leurs sels, est transformé en la suspension aqueuse.

5. Procédé selon l'une des revendications 1 à 4, **caractérisé en ce que** la suspension contenant l'adsorbat est envoyée au laveur séparant les oxydes de souffre.

6. Procédé selon l'une des revendications 1 à 4, **caractérisé en ce qu'**après le dépoussiérage, le gaz de fumée est débarrassé d'hydracides halogénés et d'oxydes de souffre dans un ou deux laveurs reliés l'un après l'autre, et **en ce que** la suspension contenant l'adsorbat est envoyée au laveur séparant les hydracides halogénés.

7. Procédé selon l'une des revendications 1 à 4, **caractérisé en ce que** la suspension contenant l'adsorbat est envoyée au séchoir à pulvérisation.

8. Procédé selon la revendication 7, **caractérisé en ce que** la suspension contenant l'adsorbat, conjointement à des eaux de traitement ou des solutions ou des suspensions d'agents de neutralisation, comme du lait de chaux, est envoyée au séchoir à pulvérisation.

9. Procédé selon l'une des revendications 1 à 8, **caractérisé en ce que** des additifs tamponnant la valeur de pH, comme des acides carboxyliques, des acides dicarboxyliques ou leurs sels alcalins ou alcalino-terreux sont ajoutés au procédé en tant que composants de l'adsorbant introduit dans l'adsorbeur à couche filtrante.

10. Procédé selon l'une des revendications 1 à 8, **caractérisé en ce que** des additifs tamponnant la valeur de pH, comme des acides carboxyliques, des acides dicarboxyliques ou leurs sels alcalins ou alcalino-terreux sont dosés dans le courant gazeux pénétrant dans l'adsorbeur à couche filtrante et ces additifs, conjointement avec l'adsorbant ou l'adsorbat recirculé, sont précipités sur les surfaces filtrantes de l'adsorbeur à couche filtrante.

11. Procédé selon l'une des revendications 1 à 8, **caractérisé en ce que** des additifs tamponnant la valeur de pH, comme des acides carboxyliques, des acides dicarboxyliques ou leurs sels alcalins ou alcalino-terreux, sont mélangés à l'adsorbat produit lors du nettoyage de l'adsorbeur à couche filtrante.

12. Procédé selon l'une des revendications 1 à 8, **caractérisé en ce que** des additifs tamponnant la valeur de pH, comme des acides carboxyliques, des acides dicarboxyliques ou leurs sels alcalins ou alcalino-terreux, sont ajoutés à la suspension d'adsorbat préparée à partir de l'adsorbat produit lors du nettoyage de l'adsorbeur à couche filtrante.
